# EUROPEAN PATENT SPECIFICATION

(11) **EP 3 274 077 B1**
(45) Date of publication and mention of the grant of the patent: **14.09.2022**
(21) Application number: 16717430.9
(22) Date of filing: 18.03.2016
(51) Int. Cl.: B01D 53/94, F01N 3/08, F01N 3/20, F01N 13/00, B01J 29/54, B01J 29/74

(54) **PASSIVE NOX ADSORBER COMPRISING A NOBLE METAL AND A MOLECULAR SIEVE HAVING AN OFF FRAMEWORK TYPE**
PASSIVER NOX-ADSORBER MIT EDELMETALL UND EINEM MOLEKULARSIEB MIT EINEM OFF-SYSTEM
ADSORBEUR DE NOX PASSIF COMPRENANT UN MÉTAL NOBLE ET UN TAMIS MOLÉCULAIRE PRÉSENTANT UN TYPE D'OSSATURE OFF

(30) Priority: 25.03.2015 US 201562138004 P
(43) Date of publication of application: 31.01.2018
(73) Proprietor: Johnson Matthey Public Limited Company, London EC4A 4AB (GB)
(72) Inventor: COLLIER, Jillian Elaine, Reading Berkshire RG4 7NL (GB)
(74) Representative: Lenden, Philip
(86) International application number: PCT/GB2016/050759
(87) International publication number: WO 2016/151296

(56) References cited:
- EP-A2- 1 027 919
- WO-A1-2008/047170
- WO-A1-2012/007874

## Description

### FIELD OF THE INVENTION

The invention relates to a passive NOₓ adsorber and its use in an exhaust system for internal combustion engines.

### BACKGROUND OF THE INVENTION

Internal combustion engines produce exhaust gases containing a variety of pollutants, including nitrogen oxides ("NOₓ"), carbon monoxide, and uncombusted hydrocarbons. These emissions are the subject of governmental legislation. Emission control systems are widely utilized to reduce the amount of these pollutants emitted to atmosphere, and typically achieve very high efficiencies once they reach their operating temperature (typically, 200°C and higher). However, these systems are relatively inefficient below their operating temperature (the "cold start" period).

For instance, current urea based selective catalytic reduction (SCR) applications implemented for meeting Euro 6b emissions require that the temperature at the urea dosing position be above about 180°C before urea can be dosed and used to convert NOₓ. NOₓ conversion below 180°C is difficult to address using the current systems, and future European and US legislation will stress the low temperature NOₓ storage and conversion. Currently this is achieved by heating strategies but this has a detrimental effect of CO₂ emissions.

As even more stringent national and regional legislation lowers the amount of pollutants that can be emitted from diesel or gasoline engines, reducing emissions during the cold start period is becoming a major challenge. Thus, methods for reducing the level of NOₓ emitted during cold start condition continue to be explored.

For instance, PCT Intl. Appl. WO 2008/047170 discloses a system wherein NOₓ from a lean exhaust gas is adsorbed at temperatures below 200°C and is subsequently thermally desorbed above 200°C. The NOₓ adsorbent is taught to consist of palladium and a cerium oxide or a mixed oxide or composite oxide containing cerium and at least one other transition metal.

U.S. Appl. Pub. No. 2011/0005200 teaches a catalyst system that simultaneously removes ammonia and enhances net NOₓ conversion by placing an ammonia-selective catalytic reduction ("NH₃-SCR") catalyst formulation downstream of a lean NOₓ trap. The NH₃-SCR catalyst adsorbs the ammonia that is generated during the rich pulses in the lean NOₓ trap. The stored ammonia then reacts with the NOₓ emitted from the upstream lean NOₓ trap, which increases NOₓ conversion rate while depleting the stored ammonia.

PCT Intl. Appl. WO 2004/076829 discloses an exhaust-gas purification system which includes a NOₓ storage catalyst arranged upstream of an SCR catalyst. The NOₓ storage catalyst includes at least one alkali, alkaline earth, or rare earth metal which is coated or activated with at least one platinum group metal (Pt, Pd, Rh, or Ir). A particularly preferred NOₓ storage catalyst is taught to include cerium oxide coated with platinum and additionally platinum as an oxidizing catalyst on a support based on aluminum oxide. EP 1027919 discloses a NOₓ adsorbent material that comprises a porous support material, such as alumina, zeolite, zirconia, titania, and/or lanthana, and at least 0.1 wt% precious metal (Pt, Pd, and/or Rh). Platinum carried on alumina is exemplified. U.S. Appl. Pub. No. 2012/0308439 A1 teaches a cold start catalyst that comprises (1) a zeolite catalyst comprising a base metal, a noble metal, and a zeolite, and (2) a supported platinum group metal catalyst comprising one or more platinum group metals and one or more inorganic oxide carriers.

Co-pending U.S. Appl. Ser. No. 14/563,340 discloses a passive NOₓ adsorber (PNA) that comprises a noble metal and a small pore molecular sieve such as chabazite (CHA). Although noble metal/zeolite PNA catalysts such as Pd/CHA and Pd/Beta show good NOₓ storage performance and improved sulfur tolerance compared to non-zeolite PNAs, the temperature at which the NOₓ is released is too low for the downstream SCR component to convert all of the NOₓ to N₂.

As with any automotive system and process, it is desirable to attain still further improvements in exhaust gas treatment systems, particularly under cold start conditions. We have discovered a new passive NOₓ adsorber that provides enhanced cleaning of the exhaust gases from internal combustion engines. The new passive NOₓ adsorber not only increases the NOₓ release temperature but also increases the total NOₓ storage capacity.

WO2012/007874 relates to a copper containing ZSM-34, OFF and/or ERI zeolitic material for selective reduction of NOx.

### SUMMARY OF THE INVENTION

The invention is an exhaust system for internal combustion engines comprising a passive NOₓ adsorber that is effective to adsorb NOₓ at or below a low temperature and release the adsorbed NOₓ at temperatures above the low temperature. The passive NOₓ adsorber comprises a first molecular sieve catalyst, the first molecular sieve catalyst comprising a first noble metal and a molecular sieve having an OFF framework. The first noble metal is palladium and the low temperature is 200°C. The exhaust system further comprising a catalyst component downstream of the PNA, the catalyst component selected from the group consisting of: a selective catalytic reduction (SCR) catalyst, a particulate filter, a SCR filter, a NOₓ adsorber catalyst, a three-way catalyst, an oxidation catalyst, and combinations thereof The invention also includes a method for treating exhaust gas from an internal combustion engine utilizing the passive NOₓ adsorber.

### BRIEF DESCRIPTION OF THE DRAWING

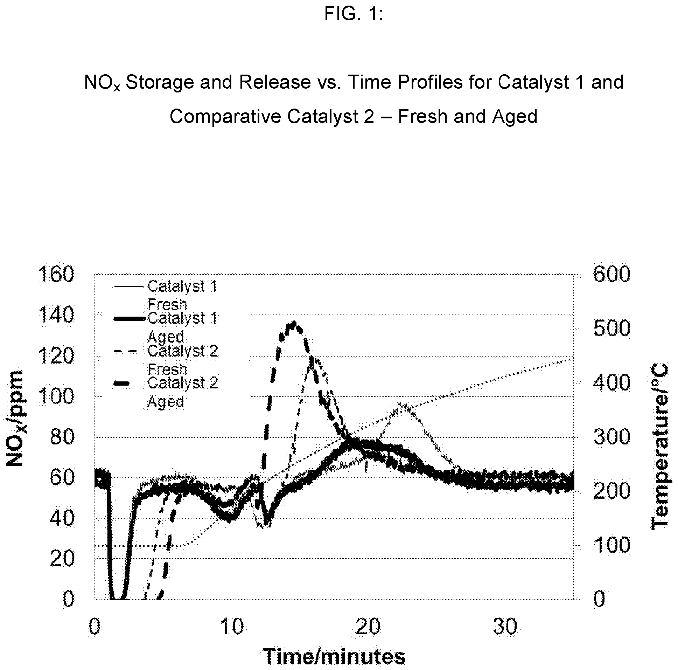

FIG. 1 shows the NOₓ storage and release vs. time profiles for a PNA of the invention and a comparative PNA in the fresh state and after hydrothermal ageing.

### DETAILED DESCRIPTION OF THE INVENTION

The passive NOₓ adsorber of the invention is effective to adsorb NOₓ at or below a low temperature and release the adsorbed NOₓ at temperatures above the low temperature. The low temperature is about 200°C. The passive NOₓ adsorber comprises a first noble metal and a molecular sieve having an OFF Framework Type. The first noble metal is palladium.

The molecular sieve has an OFF Framework Type and may be any natural or a synthetic molecular sieve, including zeolites, and is preferably composed of aluminum, silicon, and/or heteroatoms (e.g., Ga) and has an OFF framework. The OFF molecular sieve typically has a three-dimensional arrangement of TO₄ (T = Si, Al, Ga) units or tetrahedra that are joined by the sharing of oxygen atoms, and are characterized by a channel system comprising 1-D 12-ring channels interconnected by 8-ring windows that create a 2-D network normal to the 12-ring channel direction. The designations such as 12-ring and 8-ring refer to the number of tetrahedral atoms (e.g., Si, Al) or oxygen atoms that make up a ring system. Molecular sieve frameworks are typically anionic, which are counterbalanced by charge compensating cations, typically alkali and alkaline earth elements (e.g., Na, K, Mg, Ca, Sr, and Ba), ammonium ions, and also protons. Other metals (e.g., Fe, Ti) may be incorporated into the framework of the OFF molecular sieve to produce a metal-incorporated molecular sieve.

Preferably, the OFF-framework molecular sieve is an aluminosilicate zeolite or a metal-substituted aluminosilicate zeolite. More preferably, the OFF-framework molecular sieve is Linde T, LZ-217, RMA-4, TMA-O, or offretite zeolite.

The passive NOₓ adsorber may be prepared by any known means. For instance, the first noble metal may be added to the OFF-framework molecular sieve to form the passive NOₓ adsorber by any known means, the manner of addition is not considered to be particularly critical. For example, a noble metal compound (such as palladium nitrate) may be supported on the molecular sieve by impregnation, adsorption, ion-exchange, incipient wetness, precipitation, spray drying, or the like. Alternatively, the noble metal may be added during molecular sieve synthesis. Other metals may also be added to the passive NOₓ adsorber.

Preferably, the passive NOₓ adsorber further comprises a flow-through substrate or filter substrate. The flow-through or filter substrate is a substrate that is capable of containing catalyst components. The substrate is preferably a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metallo aluminosilicates (such as cordierite and spudomene), or a mixture or mixed oxide of any two or more thereof. Cordierite, a magnesium aluminosilicate, and silicon carbide are particularly preferred.

The metallic substrates may be made of any suitable metal, and in particular heat-resistant metals and metal alloys such as titanium and stainless steel as well as ferritic alloys containing iron, nickel, chromium, and/or aluminum in addition to other trace metals.

The flow-through substrate is preferably a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval.

The filter substrate is preferably a wall-flow monolith filter. The channels of a wall-flow filter are alternately blocked, which allow the exhaust gas stream to enter a channel from the inlet, then flow through the channel walls, and exit the filter from a different channel leading to the outlet. Particulates in the exhaust gas stream are thus trapped in the filter.

The passive NOₓ adsorber may be added to the flow-through or filter substrate by any known means. A representative process for preparing the passive NOₓ adsorber using a washcoat procedure is set forth below. It will be understood that the process below can be varied according to different embodiments of the invention.

The pre-formed passive NOₓ adsorber may be added to the flow-through or filter substrate by a washcoating step. Alternatively, the passive NOₓ adsorber may be formed on the flow-through or filter substrate by first washcoating unmodified molecular sieve onto the substrate to produce a molecular sieve-coated substrate. Noble metal may then be added to the molecular sieve-coated substrate, which may be accomplished by an impregnation procedure, or the like.

The washcoating procedure is preferably performed by first slurrying finely divided particles of the passive NOₓ adsorber (or unmodified OFF-framework molecular sieve) in an appropriate solvent, preferably water, to form the slurry. Additional components, such as transition metal oxides, binders, stabilizers, or promoters may also be incorporated in the slurry as a mixture of water soluble or water-dispersible compounds. If unmodified OFF-framework molecular sieve is utilized in the slurry, a noble metal compound (such as palladium nitrate) may be added into the slurry in order to form the noble metal/ OFF-framework molecular sieve during the washcoating process.

The slurry preferably contains between 10 to 70 weight percent solids, more preferably between 20 to 50 weight percent. Prior to forming the slurry, the passive NOₓ adsorber (or unmodified OFF-framework molecular sieve) particles are preferably subject to a size reduction treatment (e.g., milling) such that the average particle size of the solid particles is less than 20 microns in diameter.

The flow-through or filter substrate may then be dipped one or more times into the slurry or the slurry may be coated on the substrate such that there will be deposited on the substrate the desired loading of catalytic materials. If the first noble metal is not incorporated into the OFF-framework molecular sieve prior to, or during, washcoating the flow-through or filter substrate, the molecular sieve-coated substrate is typically dried and calcined and then, the first noble metal may be added to the molecular sieve-coated substrate by any known means, including impregnation, adsorption, or ion-exchange, for example, with a noble metal compound (such as palladium nitrate).

The passive NOₓ adsorber coating can cover the total length of the substrate, or alternately can only cover a portion of the total length of the substrate such that only an inlet zone or outlet zone of passive NOₓ adsorber coating is formed. Preferably, the entire length of the substrate is coated with the passive NOₓ adsorber slurry so that a washcoat of the passive NOₓ adsorber covers the entire surface of the substrate.

After the flow-through or filter substrate has been coated with the passive NOₓ adsorber, and impregnated with noble metal if necessary, the coated substrate is preferably dried and then calcined by heating at an elevated temperature to form the passive NOₓ adsorber-coated substrate. Preferably, the calcination occurs at 400 to 600°C for approximately 1 to 8 hours.

In an alternative embodiment, the flow-through or filter substrate is comprised of the passive NOₓ adsorber. In this case, the passive NOₓ adsorber is extruded to form the flow-through or filter substrate. The passive NOₓ adsorber extruded substrate is preferably a honeycomb flow-through monolith.

Extruded molecular sieve substrates and honeycomb bodies, and processes for making them, are known in the art. See, for example, U.S. Pat. Nos. 5,492,883, 5,565,394, and 5,633,217 and U.S. Pat. No. Re. 34,804. Typically, the molecular sieve material is mixed with a permanent binder such as silicone resin and a temporary binder such as methylcellulose, and the mixture is extruded to form a green honeycomb body, which is then calcined and sintered to form the final small pore molecular sieve flow-through monolith. The molecular sieve may contain the first noble metal prior to extruding such that a passive NOₓ adsorber monolith is produced by the extrusion procedure. Alternatively, the first noble metal may be added to a pre-formed molecular sieve monolith in order to produce the passive NOₓ adsorber monolith.

Additionally, the passive NOₓ adsorber may further comprise a second molecular sieve catalyst. The second molecular sieve catalyst comprises a second noble metal and a second molecular sieve, wherein the second molecular sieve does not have an OFF Framework Type. In this embodiment, the passive NOₓ adsorber may comprise one or more additional molecular sieve catalysts (e.g., a third molecular sieve catalyst and/or a fourth molecular sieve catalyst), provided that the additional molecular sieve(s) are different than the first and second molecular sieves.

The second noble metal is independently selected from platinum, palladium, rhodium, gold, silver, iridium, ruthenium, osmium, or mixtures thereof; preferably, it is independently selected from palladium, platinum, rhodium, or mixtures thereof. More preferably, the first noble metal and the second noble metal are both palladium.

The second molecular sieve is preferably a small pore molecular sieve having the Framework Type of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SFW, SIV, THO, TSC, UEI, UFI, VNI, YUG, and ZON, a medium pore molecular sieve having the Framework Type of MFI, FER, MWW, or EUO, a large pore molecular sieve having the Framework Type of CON, BEA, FAU, MAZ, MOR, or EMT, as well as mixtures or intergrowths of any two or more. More preferably, the small pore zeolite is AEI or CHA, the medium pore zeolite is MFI, and the large pore zeolite is BEA.

The passive NOₓ adsorber containing the second molecular sieve catalyst may be prepared by processes well known in the prior art. The noble metal/OFF-framework molecular sieve and the second molecular sieve catalyst may be physically mixed to produce the passive NOₓ adsorber. Preferably, the passive NOₓ adsorber further comprises a flow-through substrate or filter substrate. In one embodiment, the noble metal/OFF-framework molecular sieve and the second molecular sieve catalyst are coated onto the flow-through or filter substrate, and preferably deposited on the flow-through or filter substrate using a washcoat procedure to produce the passive NOₓ adsorber.

Suitable flow-through or filter substrates are described above, as well as procedures for washcoating the substrates with the noble metal/OFF-framework molecular sieve and the second molecular sieve catalyst. The order of addition of the noble metal/OFF-framework molecular sieve and the second molecular sieve catalyst onto the flow-through or filter substrate is not considered critical. Thus, the noble metal/OFF-framework molecular sieve may be washcoated on the substrate prior to the second molecular sieve catalyst or the second molecular sieve catalyst may be washcoated on the substrate prior to the noble metal/OFF-framework molecular sieve or both the noble metal/OFF-framework molecular sieve and the second molecular sieve catalyst can be washcoated on the substrate simultaneously.

In an alternative embodiment, the flow-through or filter substrate is comprised of the noble metal/OFF-framework molecular sieve, the second molecular sieve catalyst, or both the noble metal/OFF-framework molecular sieve and second molecular sieve catalyst. In this case, the noble metal/OFF-framework molecular sieve, the second molecular sieve catalyst, or both are extruded to form the flow-through or filter substrate. If not included in the extruded substrate, the noble metal/OFF-framework molecular sieve or second molecular sieve catalyst is coated onto the extruded flow-through or filter substrate. The extruded substrate is preferably a honeycomb flow-through monolith.

Preferably, the passive NOₓ adsorber comprises a first layer comprising the noble metal/OFF-framework molecular sieve and a second layer comprising the second molecular sieve catalyst. Typically, the first layer may be disposed on a substrate and the second layer is disposed on the first layer. Alternatively, the second layer may be disposed on a substrate and the first layer disposed on the second layer.

In a separate embodiment, the passive NOₓ adsorber comprises a first zone comprising the noble metal/OFF-framework molecular sieve and a second zone comprising the second molecular sieve catalyst. The first zone may be upstream of the second zone such that the first zone contacts the exhaust gas prior to the second zone, or alternatively the second zone may be upstream of the first zone such that the second zone contacts the exhaust gas prior to the first zone. Preferably, the second zone is located upstream of the first zone such that the exhaust gas contacts the second molecular sieve catalyst prior to contacting the first molecular sieve catalyst. The two zones may be on the same catalyst component (or catalyst brick), or the first zone comprising the noble metal/OFF-framework molecular sieve may be located on a separate brick (or catalyst component) than the second zone comprising the second molecular sieve catalyst.

The invention relates to an exhaust system for internal combustion engines comprising the passive NOₓ adsorber. The exhaust system comprises one or more additional after-treatment devices capable of removing pollutants from internal combustion engine exhaust gases at normal operating temperatures. The exhaust system comprises the passive NOₓ adsorber and one or more other catalyst components selected from: (1) a selective catalytic reduction (SCR) catalyst, (2) a particulate filter, (3) a SCR filter, (4) a NOₓ adsorber catalyst, (5) a three-way catalyst, (6) an oxidation catalyst, or any combination thereof. The passive NOₓ adsorber is preferably a separate component from any of the above after-treatment devices. Alternatively, the passive NOₓ adsorber can be incorporated as a component into any of the above after-treatment devices.

These after-treatment devices are well known in the art. Selective catalytic reduction (SCR) catalysts are catalysts that reduce NOₓ to N₂ by reaction with nitrogen compounds (such as ammonia or urea) or hydrocarbons (lean NOₓ reduction). A typical SCR catalyst is comprised of a vanadia-titania catalyst, a vanadia-tungsta-titania catalyst, or a metal/zeolite catalyst such as iron/beta zeolite, copper/beta zeolite, copper/SSZ-13, copper/SAPO-34, Fe/ZSM-5, or copper/ZSM-5.

Particulate filters are devices that reduce particulates from the exhaust of internal combustion engines. Particulate filters include catalyzed particulate filters and bare (non-catalyzed) particulate filters. Catalyzed particulate filters (for diesel and gasoline applications) include metal and metal oxide components (such as Pt, Pd, Fe, Mn, Cu, and ceria) to oxidize hydrocarbons and carbon monoxide in addition to destroying soot trapped by the filter.

Selective catalytic reduction filters (SCRF) are single-substrate devices that combine the functionality of an SCR and a particulate filter. They are used to reduce NOₓ and particulate emissions from internal combustion engines. In addition to the SCR catalyst coating, the particulate filter may also include other metal and metal oxide components (such as Pt, Pd, Fe, Mn, Cu, and ceria) to oxidize hydrocarbons and carbon monoxide in addition to destroying soot trapped by the filter.

NOₓ adsorber catalysts (NACs) are designed to adsorb NOₓ under lean exhaust conditions, release the adsorbed NOₓ under rich conditions, and reduce the released NOₓ to form N₂. NACs typically include a NOₓ-storage component (e.g., Ba, Ca, Sr, Mg, K, Na, Li, Cs, La, Y, Pr, and Nd), an oxidation component (preferably Pt) and a reduction component (preferably Rh). These components are contained on one or more supports.

Three-way catalysts (TWCs) are typically used in gasoline engines under stoichiometric conditions in order to convert NOₓ to N₂, carbon monoxide to CO₂, and hydrocarbons to CO₂ and H₂O on a single device.

Oxidation catalysts, and in particular diesel oxidation catalysts (DOCs), are well-known in the art. Oxidation catalysts are designed to oxidize CO to CO₂ and gas phase hydrocarbons (HC) and an organic fraction of diesel particulates (soluble organic fraction) to CO₂ and H₂O. Typical oxidation catalysts include platinum and optionally also palladium on a high surface area inorganic oxide support, such as alumina, silica-alumina and a zeolite.

The passive NOₓ adsorber is preferably a separate component from any of the above after-treatment devices. Alternatively, the passive NOₓ adsorber can be incorporated as a component into any of the above after-treatment devices. For instance, a substrate may comprise and upstream zone of the passive NOₓ adsorber and a downstream zone of SCR catalyst on the same substrate.

The exhaust system can be configured so that the passive NOₓ adsorber is located close to the engine and the additional after-treatment device(s) are located downstream of the passive NOₓ adsorber. Thus, under normal operating conditions, engine exhaust gas first flows through the passive NOₓ adsorber prior to contacting the after-treatment device(s). Alternatively, the exhaust system may contain valves or other gas-directing means such that during the low temperature period (below a temperature ranging from about 150 to 220°C, preferably 200°C, about as measured at the after-treatment device(s)), the exhaust gas is directed to contact the after-treatment device(s) before flowing to the passive NOₓ adsorber. Once the after-treatment device(s) reaches the operating temperature (about 150 to 220°C, preferably 200°C, as measured at the after-treatment device(s)), the exhaust gas flow is then redirected to contact the passive NOₓ adsorber prior to contacting the after-treatment device(s). This ensures that the temperature of the passive NOₓ adsorber remains low for a longer period of time, and thus improves efficiency of the passive NOₓ adsorber, while simultaneously allowing the after-treatment device(s) to more quickly reach operating temperature. U.S. Pat. No. 5,656,244, the teachings of which are incorporated herein by reference, for example, teaches means for controlling the flow of the exhaust gas during cold-start and normal operating conditions.

The invention also includes a method for treating exhaust gas from an internal combustion engine. The method comprises adsorbing NOₓ onto the passive NOₓ adsorber at temperatures at or below a low temperature, thermally desorbing NOₓ from the passive NOₓ adsorber at a temperature above the low temperature, and catalytically removing the desorbed NOₓ on a catalyst component downstream of the passive NOₓ adsorber. Preferably, the low temperature is about 200°C.

The catalyst component downstream of the passive NOₓ adsorber is a SCR catalyst, a particulate filter, a SCR filter, a NOₓ adsorber catalyst, a three-way catalyst, an oxidation catalyst, or combinations thereof.

The following examples merely illustrate the invention. Those skilled in the art will recognize many variations that are within the spirit of the invention and scope of the claims.

### EXAMPLE 1: PREPARATION OF PASSIVE NOₓ ADSORBERS (PNAs) PNA 1: 1 wt.% Pd/OFF

Palladium is added to OFF zeolite (silica-to-alumina ratio (SAR) of 7; phase pure by XRD) according to the following procedure to produce PNA 1: The powder catalyst is prepared by wet impregnation of the zeolite using a soluble palladium compound as the precursor. After drying at 105°C, the sample is calcined at 500°C to provide the fresh catalyst, and a portion of the fresh catalyst is then hydrothermally aged at 750°C in an air atmosphere containing 10% H₂O. The Pd loading of PNA 1 is 1 wt.%.

### Comparative PNA 2: 1 wt.% Pd/CHA

Comparative PNA 2 is produced using the same procedure as PNA 1 with the exception that a small pore chabazite (CHA) zeolite with a silica-to-alumina ratio (SAR) of 25 is used in place of OFF. The Pd loading of Comparative PNA 2 is 1 wt.%.

### EXAMPLE 2: NOₓ STORAGE CAPACITY TESTING PROCEDURES

The catalyst (0.4 g) is held at the adsorption temperature of about 100°C for 5 minutes in an NO-containing gas mixture flowing at 2 liters per minute at a MHSV of 300 L * hr⁻¹ * g⁻¹. This adsorption stage is followed by Temperature Programmed Desorption (TPD) at a ramping rate of 17°C/minute in the presence of the NO-containing gas until the bed temperature reaches about 450°C in order to purge the catalyst of all stored NOₓ for further testing.

The NO-containing gas mixture during both the adsorption and desorption comprises 10 vol.% O₂, 60 ppm NO, 5 vol.% CO₂, 1500 ppm CO, 130 ppm C₃H₆, and 5 vol.% H₂O in N₂.

The NOₓ uptake and release profiles are shown in Figure 1 for fresh and aged (hydrothermally aged at 750°C as described in Example 1) catalysts. The results show that although the total NOₓ stored is lower for Pd/OFF, the NOₓ release occurs at a higher temperature for both fresh and aged catalysts relative to the corresponding Pd/CHA catalysts. For both catalysts the NOₓ release shifts to lower temperatures following ageing.

## Claims

1. An exhaust system for internal combustion engines comprising:
(i) a passive NOₓ adsorber effective to adsorb NOₓ at or below a low temperature and release the adsorbed NOₓ at temperatures above the low temperature, said passive NOₓ adsorber comprising a first molecular sieve catalyst, said first molecular sieve catalyst comprising a first noble metal and a molecular sieve having an OFF Framework Type;
wherein the first noble metal is palladium; and
wherein the low temperature is 200°C; and
(ii) a catalyst component downstream of the passive NOx absorber, the catalyst component selected from the group consisting of: a selective catalytic reduction (SCR) catalyst, a particulate filter, a SCR filter, a NOₓ adsorber catalyst, a three-way catalyst, an oxidation catalyst, and combinations thereof.

2. The exhaust system of claim 1 wherein the molecular sieve having an OFF Framework Type is selected from the group consisting of aluminosilicate zeolite and a metal-substituted aluminosilicate zeolite.

3. The exhaust system of claim 1 or claim 2 wherein the molecular sieve having an OFF Framework Type is selected from the group consisting of Linde T, LZ-217, RMA-4 and TMA-O.

4. The exhaust system of any of claims 1 to 3 wherein the passive NOₓ adsorber is coated onto a flow-through or filter substrate.

5. The exhaust system of any of claims 1 to 3 wherein the passive NOₓ adsorber is extruded to form a flow-through or filter substrate.

6. The exhaust system of any of claims 1 to 5 wherein the passive NOₓ adsorber further comprises a second molecular sieve catalyst, wherein the second molecular sieve catalyst comprises a second noble metal and a second molecular sieve, wherein the second molecular sieve does not have an OFF Framework Type.

7. The exhaust system of claim 6 wherein the second noble metal is independently selected from the group consisting of platinum, palladium, rhodium, gold, silver, iridium, ruthenium, osmium, and mixtures thereof, preferably palladium.

8. The exhaust system of claim 6 or claim 7 wherein the second molecular sieve is a small, medium or large pore molecular sieve selected from the group of Framework Type consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MAZ, MER, MON, NSI, OWE, PAU, PHI, RHO, RTH, SAT, SAV, SFW, SIV, THO, TSC, UEI, UFI, VNI, YUG, ZON, BEA, and MFI, and intergrowths of two or more.

9. The exhaust system of claim 8 wherein the small pore molecular sieve is selected from the group Framework Type consisting of AEI and CHA.

10. A method for reducing NOₓ in an exhaust gas, said method comprising adsorbing NOₓ onto the passive NOₓ adsorber of the exhaust system of any of claims 1 to 9 at or below a low temperature, thermally desorbing NOₓ from the passive NOₓ adsorber at a temperature above the low temperature, and catalytically removing the desorbed NOₓ on the catalyst component downstream of the passive NOₓ adsorber, wherein the low temperature is 200°C.

## Patentansprüche

1. Abgassystem für Verbrennungsmotoren, umfassend:
(i) einen passiven NOₓ-Adsorber, der wirksam ist, um NOₓ bei oder unter einer niedrigen Temperatur zu adsorbieren und das adsorbierte NOx bei Temperaturen über der niedrigen Temperatur freizusetzen, wobei der passive NOx-Adsorber einen ersten Molekularsiebkatalysator umfasst, wobei der erste Molekularsiebkatalysator ein erstes Edelmetall und ein Molekularsieb mit einem OFF-Gerüsttyp umfasst;
wobei das erste Edelmetall Palladium ist; und
wobei die niedrige Temperatur 200 °C beträgt; und
(ii) eine Katalysatorkomponente stromabwärts des passiven NOx-Absorbers, wobei die Katalysatorkomponente ausgewählt ist aus der Gruppe bestehend aus: einem selektiven katalytischen Reduktionskatalysator (SCR-Katalysator), einem Partikelfilter, einem SCR-Filter, einem NOₓ-Adsorberkatalysator, einem Dreiwegekatalysator, einem Dreiwegekatalysator, einem Oxidationskatalysator und Kombinationen davon.

2. Abgassystem nach Anspruch 1, wobei das Molekularsieb mit einem OFF-Gerüsttyp ausgewählt ist aus der Gruppe bestehend aus Aluminosilikat-Zeolith und einem metallsubstituierten Aluminosilikat-Zeolith.

3. Abgassystem nach Anspruch 1 oder Anspruch 2, wobei das Molekularsieb mit einem OFF-Gerüsttyp ausgewählt ist aus der Gruppe bestehend aus Linde T, LZ-217, RMA-4 und TMA-O.

4. Abgassystem nach einem der Ansprüche 1 bis 3, wobei der passive NOₓ-Adsorber auf einem Durchfluss- oder Filtersubstrat aufgebracht ist.

5. Abgassystem nach einem der Ansprüche 1 bis 3, wobei der passive NOₓ-Adsorber extrudiert wird, um ein Durchfluss- oder Filtersubstrat zu bilden.

6. Abgassystem nach einem der Ansprüche 1 bis 5, wobei der passive NO_{X}-Adsorber ferner einen zweiten Molekularsiebkatalysator umfasst, wobei der zweite Molekularsiebkatalysator ein zweites Edelmetall und ein zweites Molekularsieb umfasst, wobei das zweite Molekularsieb keinen OFF-Gerüsttyp aufweist.

7. Abgassystem nach Anspruch 6, wobei das zweite Edelmetall unabhängig ausgewählt ist aus der Gruppe bestehend aus Platin, Palladium, Rhodium, Gold, Silber, Iridium, Ruthenium, Osmium und Mischungen davon, vorzugsweise Palladium.

8. Abgassystem nach Anspruch 6 oder Anspruch 7, wobei das zweite Molekularsieb ein kleines, mittel- oder großporiges Molekularsieb ist, ausgewählt aus der Gruppe des Gerüsttyps bestehend aus ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MAZ, MER, MON, NSI, OWE, PAU, PHI, RHO, RTH, SAT, SAV, SFW, SIV, THO, TSC, UEI, UFI, VNI, YUG, ZON, BEA und MFI sowie Verwachsungen von zwei oder mehr.

9. Abgassystem nach Anspruch 8, wobei das kleinporige Molekularsieb ausgewählt ist aus der Gruppe des Gerüsttyps bestehend aus AEI und CHA.

10. Verfahren zum Reduzieren von NO_{X} in einem Abgas, wobei das Verfahren das Adsorbieren von NO_{X} auf dem passiven NOx-Adsorber des Abgassystems nach einem der Ansprüche 1 bis 9 bei oder unterhalb einer niedrigen Temperatur, das thermische Desorbieren von NO_{X} vom passiven NOx-Adsorber bei einer Temperatur oberhalb der niedrigen Temperatur und das katalytische Entfernen des desorbierten NO_{X} auf der Katalysatorkomponente stromabwärts des passiven NOx-Adsorbers umfasst, wobei die niedrige Temperatur 200 °C beträgt.

## Revendications

1. Système d'échappement pour moteurs à combustion interne comprenant :
(i) un adsorbeur de NO_{X} passif efficace pour adsorber des NO_{X} à ou au-dessous d'une basse température et libérer les NO_{X} adsorbés à des températures au-dessus de la basse température, ledit adsorbeur de NO_{X} passif comprenant un premier catalyseur à tamis moléculaire, ledit premier catalyseur à tamis moléculaire comprenant un premier métal noble et un tamis moléculaire ayant un type de structure OFF ;
dans lequel le premier métal noble est le palladium ; et
dans lequel la basse température est de 200 °C ; et
(ii) un composant catalyseur en aval de l'absorbeur de NOₓ passif, le composant catalyseur étant choisi dans le groupe constitué par : un catalyseur de réduction catalytique sélective (RCS), un filtre à particules, un filtre RCS, un catalyseur adsorbeur de NO_{X}, un catalyseur à trois voies, un catalyseur d'oxydation, et des combinaisons de ceux-ci.

2. Système d'échappement selon la revendication 1 dans lequel le tamis moléculaire ayant un type de structure OFF est choisi dans le groupe constitué par une zéolite aluminosilicate et une zéolite aluminosilicate substituée par du métal.

3. Système d'échappement selon la revendication 1 ou la revendication 2 dans lequel le tamis moléculaire ayant un type de structure OFF est choisi dans le groupe constitué par Linde T, LZ-217, RMA-4 et TMA-O.

4. Système d'échappement selon l'une quelconque des revendications 1 à 3 dans lequel l'adsorbeur de NO_{X} passif est revêtu sur un substrat à flux continu ou de filtre.

5. Système d'échappement selon l'une quelconque des revendications 1 à 3 dans lequel l'adsorbeur de NO_{X} passif est extrudé pour former un substrat à flux continu ou de filtre.

6. Système d'échappement selon l'une quelconque des revendications 1 à 5 dans lequel l'adsorbeur de NO_{X} passif comprend en outre un second catalyseur à tamis moléculaire, dans lequel le second catalyseur à tamis moléculaire comprend un second métal noble et un second tamis moléculaire, dans lequel le second tamis moléculaire n'a pas un type de structure OFF.

7. Système d'échappement selon la revendication 6 dans lequel le second métal noble est indépendamment choisi dans le groupe constitué par le platine, le palladium, le rhodium, l'or, l'argent, l'iridium, le ruthénium, l'osmium, et des mélanges de ceux-ci, de préférence le palladium.

8. Système d'échappement selon la revendication 6 ou la revendication 7 dans lequel le second tamis moléculaire est un tamis moléculaire à pores petits, moyens ou grands choisi dans le groupe de type de structure constitué par ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MAZ, MER, MON, NSI, OWE, PAU, PHI, RHO, RTH, SAT, SAV, SFW, SIV, THO, TSC, UEI, UFI, VNI, YUG, ZON, BEA, et MFI, et des intercroissances de deux ou plus.

9. Système d'échappement selon la revendication 8 dans lequel le tamis moléculaire à petits pores est choisi dans le groupe de type de structure constitué par AEI et CHA.

10. Procédé de réduction des NO_{X} dans un gaz d'échappement, ledit procédé comprenant l'adsorption de NO_{X} sur l'adsorbeur de NO_{X} passif du système d'échappement selon l'une quelconque des revendications 1 à 9 à ou au-dessous d'une basse température, la désorption thermique des NO_{X} de l'adsorbeur de NO_{X} passif à une température au-dessus de la basse température, et l'élimination catalytique des NO_{X} désorbés sur le composant catalyseur en aval de l'adsorbeur de NO_{X} passif, dans lequel la basse température est de 200 °C.
